# EUROPEAN PATENT APPLICATION

(11) **EP 4 318 725 A1**
(43) Date of publication of application: **07.02.2024**
(21) Application number: 22779825.3
(22) Date of filing: 07.03.2022
(51) Int. Cl.: H01M 10/0587, H01M 4/40, H01M 4/505, H01M 4/525, H01M 4/66, H01M 10/052, H01M 10/0568, H01M 50/107, H01M 50/119, H01M 50/134, H01M 50/474

(54) **LITHIUM SECONDARY BATTERY**

(30) Priority: 30.03.2021 JP 2021057449
(71) Applicant: Panasonic Intellectual Property Management Co., Ltd., Kadoma-shi, Osaka 571-0057 (JP)
(72) Inventor: FUKUOKA Takahiro, Kadoma-shi, Osaka 571-0057 (JP); KANO Akira, Kadoma-shi, Osaka 571-0057 (JP)
(74) Representative: Novagraaf International SA
(86) International application number: PCT/JP2022/009661
(87) International publication number: WO 2022/209601

(57) **Abstract**

A lithium secondary battery includes a wound type electrode group including a positive electrode, a negative electrode, and a separator interposed between the positive electrode and the negative electrode, a core member inserted in a hollow of the electrode group, and a nonaqueous electrolyte having a lithium ion conductivity, wherein in the negative electrode, a lithium metal deposits during charging and the lithium metal dissolves during discharging, and the electrode group has a space that allows the separator to be apart from and oppose at least one of the positive electrode and the negative electrode.

## Description

### [Technical Field]

The present disclosure relates to lithium secondary batteries.

### [Background Art]

Lithium secondary batteries (lithium metal secondary batteries) are promising as a high-capacity nonaqueous electrolyte secondary battery exceeding lithium ion batteries. In lithium secondary batteries, lithium metal deposits on the negative electrode during charging, and the lithium metal dissolves during discharging, and is released as lithium ions in the nonaqueous electrolyte.

However, in lithium secondary batteries, since lithium metal deposits during charging on the negative electrode, and the lithium metal dissolves during discharging, the negative electrode goes through significant volume changes. Therefore, electrode buckling and electrode fracture are easily caused.

Patent Literature 1 proposes a wound type lithium secondary battery, in which a negative electrode and a positive electrode are wound with a separator interposed therebetween to form an electrode wound body, wherein a core material that presses the electrode wound body from inner side is provided at a hollow portion of the electrode wound body. The negative electrode is metal lithium or a lithium alloy ([0009]).

### [Citation List]

### [Patent Literature]

PLT1: Japanese Laid-Open Patent Publication No. H 11-224689

### [Summary of Invention]

### [Solution to Problem]

With the proposal of Patent Literature 1, the capacity retention rate tends to suddenly drop from an initial stage of charge and discharge cycles of lithium secondary batteries. This is probably because expansion of the negative electrode progresses along repetitive charge and discharge cycles, and the nonaqueous electrolyte is pressed out from the electrode wound body.

That is, it is difficult to keep the excellent capacity retention rate of lithium secondary batteries even if a core material that presses the electrode wound body from the inner side is provided at the hollow portion of the electrode wound body.

### [Solution to Problem]

An aspect of the present disclosure relates to a lithium secondary battery including a wound type electrode group including a positive electrode, a negative electrode, a separator disposed between the positive electrode and the negative electrode, a core member inserted in a hollow of the electrode group, and a nonaqueous electrolyte having lithium ion conductivity, wherein in the negative electrode, a lithium metal deposits during charging, and the lithium metal dissolves during discharging, and the electrode group has a space that allows the separator to be apart from and oppose at least one of the positive electrode and the negative electrode.

### [Effects of Invention]

With the present disclosure, an excellent capacity retention rate can be kept in lithium secondary batteries when charge and discharge cycles are repeated.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] FIG. 1 is a diagram schematically illustrating a part of a cross section perpendicular to a winding axis of an electrode group of a lithium secondary battery in an embodiment of the present disclosure.
[FIG. 2] FIG. 2 is a diagram schematically illustrating a part of a cross section perpendicular to a winding axis of an electrode group of a lithium secondary battery in a reference embodiment.
[FIG. 3] FIG. 3 is a diagram schematically illustrating a part of a cross section perpendicular to a winding axis of an electrode group of a lithium secondary battery in another reference embodiment.
[FIG. 4] FIG. 4 is a diagram illustrating variations of a core member.
[FIG. 5] FIG. 5 is a diagram schematically illustrating a cross section parallel to the winding axis of the lithium secondary battery in an embodiment of the present disclosure.
[FIG. 6] FIG. 6 is an enlarged view schematically illustrating a main part of the lithium secondary battery of FIG. 5.
[FIG. 7] FIG. 7 is a schematic diagram illustrating a variation of the spacer.
[FIG. 8] FIG. 8 is a schematic diagram illustrating a variation of the spacer.
[FIG. 9] FIG. 9 is a schematic diagram illustrating a variation of the spacer.
[FIG. 10] FIG. 10 is a schematic diagram illustrating a variation of the spacer.
[FIG. 11] FIG. 11 is a schematic diagram illustrating a variation of the spacer.

### [Description of Embodiments]

In the following, examples are illustrated for embodiments of the present disclosure, but the present disclosure is not limited to the examples below. In the following description, specific numerical values and materials may be exemplified, but other numerical values and other materials may be used as long as the effect of the present disclosure is obtained. For elements other than the characteristic portion in the present disclosure, elements of nonaqueous electrolyte secondary batteries including known lithium secondary batteries may be applied. In this specification, the "range of numeral value A to numeral value B" includes the numeral value A and the numeral value B in the range. When a plurality of materials are given as examples, one type of them can be selected and used singly, or two or more types can be used in combination.

A battery of the present disclosure has a wound type electrode group, a core member inserted in a hollow of the electrode group, and a nonaqueous electrolyte having a lithium ion conductivity. The battery having a wound type electrode group may be referred to as a wound type battery. The external shape of the wound type electrode group or the wound type battery is, for example, cylindrical, and the contour of the cross section perpendicular to the winding axis may be, for example, circular, a track shape, elliptic, or rectangular with their corners rounded (Chamfered edge).

The electrode group has a positive electrode, a negative electrode, and a separator disposed between the positive electrode and the negative electrode. The wound type electrode group is formed by winding the positive electrode and the negative electrode with the separator interposed therebetween around a predetermined winding core. The positive electrode, the negative electrode, and the separator may each be, for example, an elongated sheet shape. By removing the predetermined winding core, a hollow is formed at a center of the electrode group.

The lithium secondary battery according to the present disclosure is also referred to as a lithium metal secondary battery. In the negative electrode of this type of battery, lithium metal deposits during charging, and the lithium metal dissolves during discharging. Specifically, the negative electrode has at least a negative electrode current collector, and lithium metal deposits on the negative electrode current collector.

In lithium secondary batteries, for example, 70% or more of the rated capacity is developed through deposition and dissolution of lithium metal. The electron transfer at the negative electrode during charging and discharging is mainly due to the deposition and dissolution of lithium metal at the negative electrode. Specifically, 70 to 100% (e.g., 80 to 100% or 90 to 100%) of the electron transfer (or current flow in a different point of view) at the negative electrode during charging and discharging is due to the deposition and dissolution of lithium metal. That is, the negative electrode of the present disclosure is distinct from a negative electrode in which the electron transfer at the negative electrode during charging and discharging is mainly due to storing and releasing of lithium ions into or from the negative electrode active material (e.g., graphite).

In batteries in which lithium metal deposits at the negative electrode during charging, the open circuit potential (OCV: Open Circuit Voltage) of a fully charged negative electrode is, for example, 70 mV or less relative to lithium metal (dissolution deposition potential of lithium). Fully charged means, when the rated capacity of a battery is regarded as C, that the battery is charged until, for example, its state of charge (SOC: State of Charge) becomes 0.98 × C or more. The open-circuit potential (OCV) of the negative electrode at full charge can be measured by disassembling a fully charged battery in an argon atmosphere, to take out the negative electrode, and assembling a cell using lithium metal as a counter electrode. The nonaqueous electrolyte of the cell may be of the same composition as that in the disassembled battery.

The electrode group has a space (hereinafter, this space is also referred to as "inter-electrode plate space") that allows the separator to be apart from and oppose at least one of the positive electrode and the negative electrode. The inter-electrode plate space may be present at least in a discharged state. The discharged state means a state after a large amount of lithium metal is dissolved from the negative electrode, and for example, may be a state with a SOC of 0.05 × C or less. However, the inter-electrode plate space does not have to be filled completely with lithium metal in a charged state, and therefore the inter-electrode plate space may be present when, for example, in a fully charged state.

Conventional lithium secondary batteries have a high energy density, but the negative electrode goes through significant volume changes, and therefore electrode buckling and electrode fracture are easily caused. To cope with this, even if a measure is taken as proposed in Patent Literature 1, the capacity retention rate tends to suddenly drop from an initial stage of charge and discharge cycles of lithium secondary batteries. Specifically, when a core member is inserted in the hollow of the electrode group, along with repetitive charge and discharge cycles, the nonaqueous electrolyte is pressed out from the electrode group, which may cause a serious case of drying up. When the negative electrode goes through significant volume changes, without the core member, the hollow of the electrode group works to absorb the volume increase when the negative electrode expanded. However, when the core member is inserted in the hollow of the electrode group, the core member strongly presses the electrode group from the inner peripheral side and squeezes out the nonaqueous electrolyte from the electrode group. This causes a serious case of drying up.

Meanwhile, with the present disclosure, in addition to inserting a core member into a hollow of the electrode group, the electrode group has a space that allows the separator to be apart from and oppose at least one of the positive electrode and the negative electrode. In this manner, drying up is significantly is suppressed, and nonhomogeneous reactions (reaction inconsistency) in the electrode group are suppressed, and therefore sudden drop in the capacity retention rate in the initial stage of charge and discharge cycles is avoided, and an excellent capacity retention rate can be achieved. Significant suppression of the drying up is because other than the hollow of the electrode group, the inter-electrode plate space works to absorb the volume increase when the negative electrode expanded.

Just by providing the inter-electrode plate space that allows the separator to be apart from and oppose at least one of the positive electrode and the negative electrode in the electrode group, it is difficult to avoid serious phenomenons such as the electrode buckling and fracture. In other words, such serious phenomenons can be avoided by inserting a core member into the hollow of the electrode group, which is particular effect when the electrode group has an inter-electrode plate space.

To the core member inserted in the hollow of the electrode group, a significantly large pressure is repeatedly applied along with charging and discharging. Therefore, for materials for the core member, significant mechanical strength and durability are required. The Young's modulus of the material of the core member may be, for example, 100 MPa or more, or 150 MPa or more. With the Young's modulus of the material of the core member of 100 MPa or more, the core member does not deform. When the core member is deformed, the effect of avoiding the electrode buckling may be reduced.

The material of the core member is not particularly limited, and it may be metal, and in particular stainless steel is preferable in terms of strength and durability.

The shape of the core member can be selected in accordance with the shape of the hollow of the electrode group. When the electrode group is cylindrical, the shape of the core member can be cylindrical. The external diameter of the core member may be, for example, a size that allows contact between the inner peripheral surface of the electrode group and the core member of the lithium secondary battery in a discharged state after initial charge and discharge. In this case, a suitable pressure is applied to the electrode group from the core member from the inner peripheral side throughout the process of charging and discharging, and therefore electrode buckling is effectively suppressed.

The shape of the core member is preferably cylindrical, in particular a hollow cylinder. The cylindrical core member is capable of suitable expansion and contraction, and can work as a spring. Furthermore, a hollow cylindrical core member has a sufficient space for accommodating a nonaqueous electrolyte in its hollow, and therefore drying up is further difficult to occur. When the material of the core member is stainless steel with a Young's modulus of 100 MPa or more, the thickness of the material of the core member in the radial direction may be, for example, 100 µm or more and 500 µm or less.

The battery may have an outer can that accommodates the electrode group, the core member, and the nonaqueous electrolyte. The inner periphery of the outer can opposes the outer periphery of the electrode group. The presence of the outer can further suppress occurrence of electrode buckling. Particularly, occurrence of the electrode buckling at an outer peripheral side region of the electrode group where the pressure is applied less is significantly suppressed.

The outer can is a metal-made case also called a battery can. The outer can has a tubular metal-made side portion (e.g., cylindrical), and a bottom portion closing one end portion of the side portion, and has an opening at the other end portion of the side portion. The opening is closed with a sealing body, which is a different member from the outer can. The side portion and the bottom portion may be formed integrally. The internal diameter of the outer can may be a size that allows contacts between the outer periphery of the electrode group and the inner periphery of the outer can of the lithium secondary battery in a discharged state after initial charge and discharge. In this case, a suitable pressure is applied to the electrode group from the outer can from the outer peripheral side throughout the process of charging and discharging, and therefore electrode buckling is further effectively suppressed.

A significantly large pressure is applied repeatedly to the outer can as well along with charging and discharging. Therefore, the material of the outer can may also have a Young's modulus of, for example, 100 MPa or more, or 500 MPa or more.

The material of the outer can is not particularly limited as well, and it may be metal, and in particular stainless steel is preferable in terms of strength and durability.

However, the battery case is not limited to the outer can. For example, the battery case may be a film case. The film case is, for example, a case made of a laminate (laminate film) composed of a barrier layer such as a metal foil and a resin layer formed into a bag. The barrier layer works to shield from external air or moisture content more than resin, and is formed of a metal foil, metal oxide layer, etc.

The separator is apart from at least one of the positive electrode and the negative electrode by a separation distance of, for example, 15 µm or more and 60 µm or less. The separation distance is a distance in a direction (when the electrode group is cylindrical, radial direction) perpendicular to the winding axis between the electrode surface and the separator surface that define the inter-electrode plate space. When the distance is 15 µm or more, a sufficient space can be ensured for accommodating the lithium metal that deposits at the negative electrode during charging, and the stress at the time of negative electrode expansion can be sufficiently suppressed. When the distance is 60 µm or less, an excessive space is not formed in the electrode group, and electrode buckling is hardly caused.

A spacer may be interposed between the separator and at least one of the positive electrode and the negative electrode. In this case, the spacer secures the inter-electrode plate space. The spacer is provided on at least one selected from the group consisting of the positive electrode surface, the negative electrode surface, and the separator surface. By providing the spacer on the positive electrode surface or the separator surface at the positive electrode side, a surface pressure can be easily applied to the negative electrode from the separator, and dendritic lithium metal does not easily deposit, thus advantageous for improvement in the capacity retention rate in charge and discharge cycles.

In view of the above, another aspect of the present disclosure relates to a lithium secondary battery having a wound type electrode group having a positive electrode, a negative electrode, and a separator disposed between the positive electrode and the negative electrode, a core member inserted in a hollow of the electrode group, and a nonaqueous electrolyte having a lithium ion conductivity, wherein in the negative electrode, a lithium metal deposits during charging and the lithium metal dissolves during discharging, and the electrode group has a spacer interposed between the separator and at least one of the positive electrode and the negative electrode.

The spacer material has an insulating property, and may be nonporous or porous. The spacer may be formed of, for example, a composite including a resin material and particles. The resin material works to bind at least particles together. Such a spacer may be formed using a dispersion liquid including a resin material and particles.

The spacer height may be designed in accordance with a desired separation distance or the inter-electrode plate distance. The spacer height may be 15 µm or more, 20 µm or more, 25 µm or more, or 30 µm or more. The spacer height may be 60 µm or less. The spacer height is a maximum dimension of the spacer in the thickness direction (hereinafter, referred to as a direction T) of the separator. The spacer height is determined by capturing images of cross sections of the spacer in the direction T using a scanning electron microscope (SEM), and measuring the heights at random 10 points, and averaging them.

When the spacer is present, the negative electrode is divided into a first region opposing the spacer, and a second region not opposing the spacer. The inter-electrode plate space is formed in correspondence with the second region. The ratio of the area of the first region relative to a total area of the first region and the second region is not particularly limited, but may be, in view of balance between cycle characteristics and the internal resistance, for example 5% or more and 30% or less, or 5% or more and 20% or less. The larger the ratio of the area of the first region, the more the amount of lithium metal deposition per unit area in the second region. Thus, the negative electrode thickness changes to a larger extent.

The first region opposing the spacer is preferably disposed at the negative electrode in a uniform and dispersed state as much as possible. In this manner, while suppressing an increase in the internal resistance, points where lithium metal locally deposits in a large amount can be decreased, and deformation of the electrode group can be easily suppressed. Generally, the positive electrode and the negative electrode have an elongated (strip) shape having a long side and a short side. Setting the length (width) of the strip negative electrode in the short side direction as L, and setting an arbitrary circle region having a diameter of L/3 on a surface of the negative electrode, preferably, the first region and the second region coexist in such a circle region all the time.

In the following, embodiments of a battery of the present disclosure is further described with reference to the drawings. In each of the figures, the shape and characteristics of each of the constituent elements do not necessarily reflect the actual size, and do not necessarily represent the same proportional ratio. The same constituent elements in each of the figures are denoted with the same reference numerals.

### [Lithium secondary battery]

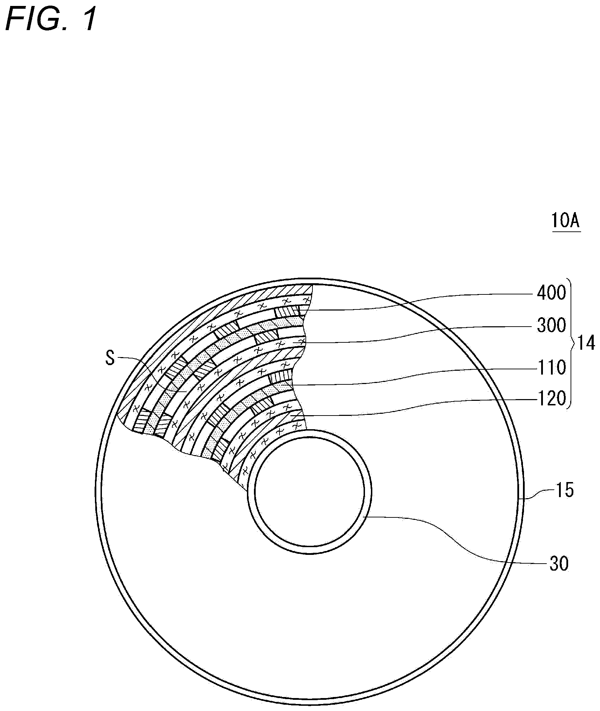

FIG. 1 is a diagram schematically illustrating a part of a cross section perpendicular to the winding axis of an electrode group of a lithium secondary battery (Battery 10A) in an embodiment of the present disclosure. The battery 10A has a cylindrical wound type electrode group 14 having a positive electrode 110, a negative electrode 120, and a separator 300 disposed between the positive electrode 110 and the negative electrode 120. A cylindrical core member 30 is inserted into a hollow of the electrode group 14. The electrode group 14 is accommodated in a cylindrical bottomed battery can 15 along with the core member 30 and a nonaqueous electrolyte (not shown) having a lithium ion conductivity. On a surface of the separator 300 at the positive electrode 110 side, a plurality of lined spacers 400 are disposed parallelly to the winding axis at every predetermined interval. The spacer 400 ensures an inter-electrode plate space S between the positive electrode 110 and the separator 300, and the positive electrode 110 is apart from and opposes the separator 300 with the inter-electrode plate space S interposed therebetween.

With the battery 10A of FIG. 1, even if lithium metal deposits at the negative electrode 120 during charging, and the volume of the negative electrode 120 increases, the lithium metal deposits to the inter-electrode plate space S with priority, and therefore expansion of the electrode group 14 itself is insignificant. Also, even if the electrode group 14 itself repeats expansion and contraction, the electrode group 14 is pressed by the core member 30 from the inner peripheral side, and pressed by the battery can 15 from the outer peripheral side, and therefore deformation does not easily occur, and electrode buckling and fracture do not easily occur.

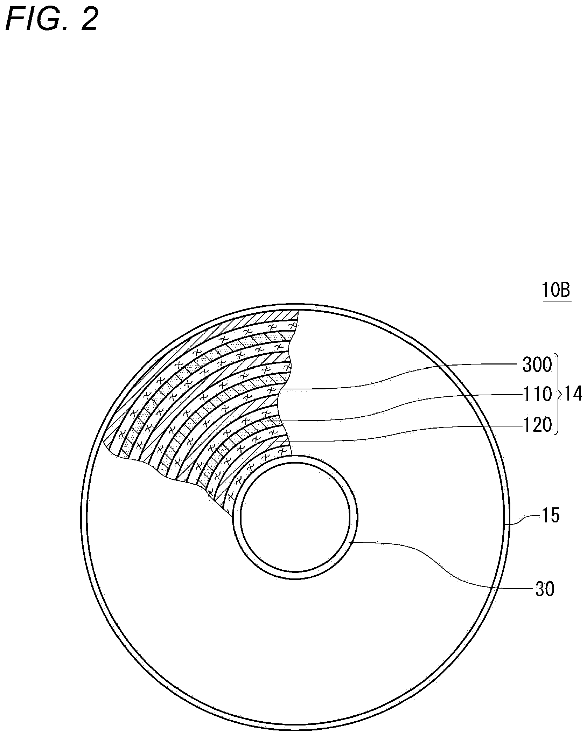

Meanwhile, FIG. 2 is a diagram schematically illustrating a part of a cross section perpendicular to the winding axis of an electrode group of a lithium secondary battery (Battery 10B) in a reference embodiment. The battery 10B has the same configuration as that of the battery 10A of FIG. 1, except that there is no spacer at the surface of the separator 300 at the positive electrode 110 side. Because there is no spacer, the inter-electrode plate space S is not ensured. In this case, despite significant expansion and contraction of the electrode group 14, with the presence of the core member 30, the core member 30 strongly presses the electrode group 14 from the inner peripheral side during charging, and the nonaqueous electrolyte is pressed out from the electrode group 14, which may cause a serious case of drying up. As a result, the capacity retention rate may suddenly drop from the initial stage of charge and discharge cycles.

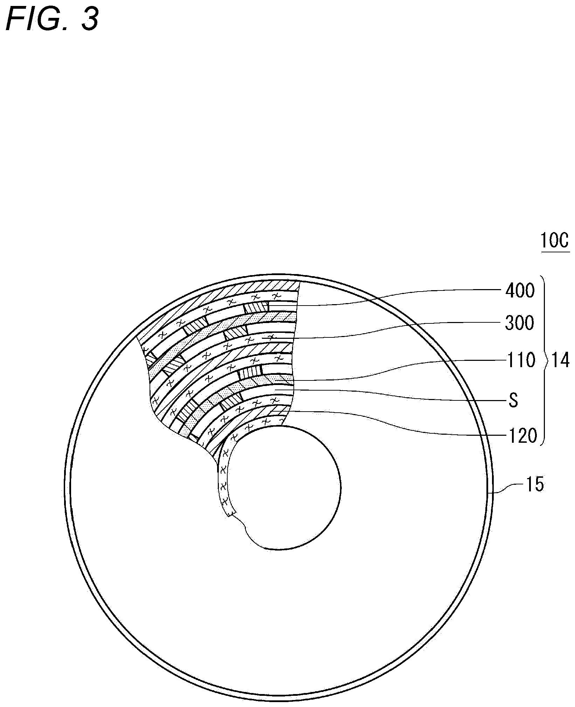

FIG. 3 is a diagram schematically illustrating a part of a cross section perpendicular to the winding axis of an electrode group of a lithium secondary battery (10C) in another reference embodiment. The battery 10C has the same configuration as that of the battery 10A of FIG. 1, except that the core member 30 is not provided. Because there is no core member 30 provided, when the electrode group 14 itself repeats expansion and contraction, the electrode group 14 is pressed by the battery can 15 from the outer peripheral side, but is not pressed from the inner peripheral side, and distortion of the electrode group is concentrated more to the inner peripheral side of the electrode group. As a result, the electrode group is easily deformed, and electrode buckling and fracture are easily caused. The electrode fracture causes a serious case of capacity drop.

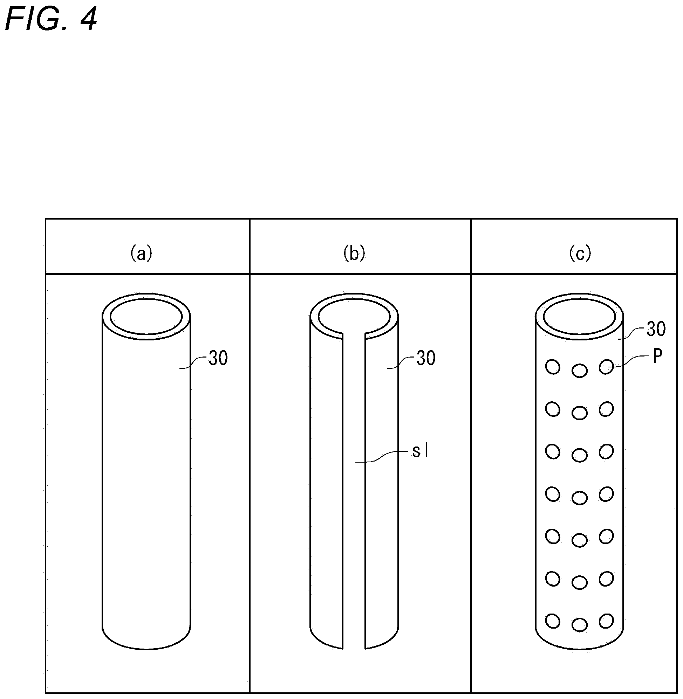

FIG. 4 is a diagram illustrating variations of the core member 30. The core member 30 of the battery 10A in FIG 1 is a type shown in FIG. 4 (a). The core member 30 shown in FIG. 4(b) is a type having a slit sl formed along the longitudinal direction of the core member 30. The slit sl enhances the functions of the core member 30 as a spring. That is, when the electrode group 14 is expanded, the core member 30 presses the electrode group 14 from the inner side, and with the narrowing slit sl, the stress from the expansion is relieved. The core member 30 of FIG. 4 (c) has through holes P at the side portion. The through holes P ease the flow of the nonaqueous electrolyte through the hollow of the electrode group 14, and therefore the effects of suppressing drying up are improved.

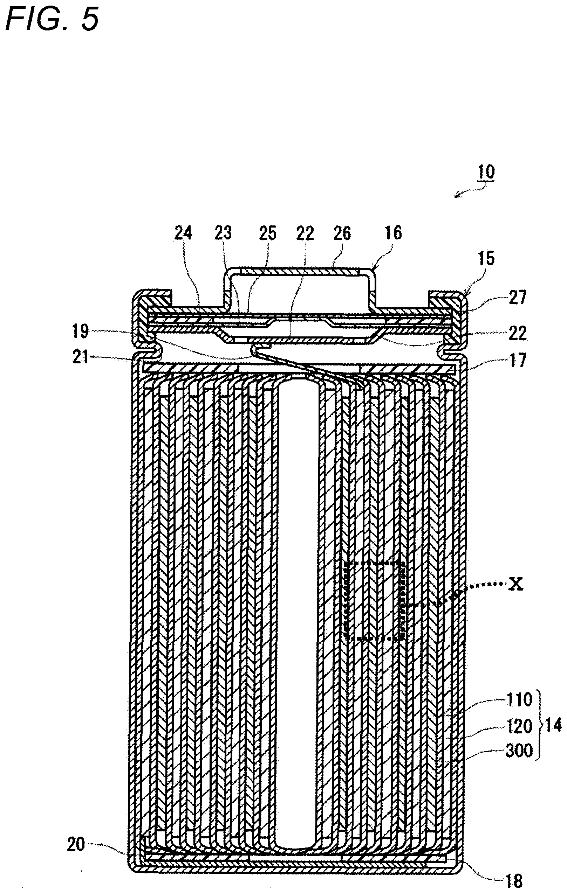

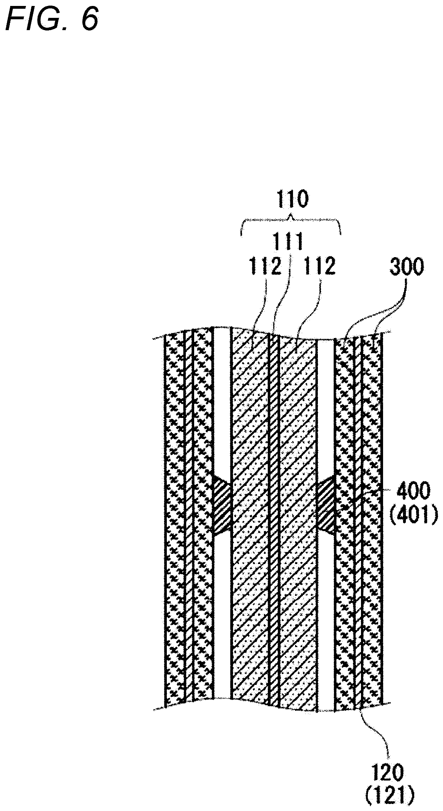

FIG. 5 is a vertical cross sectional view schematically illustrating a cross section parallel to the winding axis of a lithium secondary battery (Battery 10) of an embodiment of the present disclosure. FIG. 6 is an enlarged view schematically illustrating a main part of the battery 10 in FIG. 5. The battery 10 has the same electrode group 14 as in the battery 10A of FIG. 1, except that the spacer disposition is different.

The battery 10 includes a cylindrical battery case, a wound type electrode group 14 accommodated in the battery case, and a nonaqueous electrolyte, which is not shown. The battery case is formed with a bottomed cylindrical battery can 15, and a sealing body 16 that seals the opening of the battery can 15. The battery can 15 has a circular step portion 21 formed near the opening by pressing a part of the side wall from outside. The sealing body 16 is supported by the face of the opening side of the step portion 21. A gasket 27 is disposed between the battery can 15 and the sealing body 16, and in this manner, sealing property of the battery case is ensured. In the battery can 15, at both end portions in the winding axis direction of the electrode group 14, insulating plates 17 and 18 are disposed, respectively.

The sealing body 16 includes a filter 22, a lower valve 23, an insulating member 24, an upper valve 25, and a cap 26. The cap 26 is disposed outside the battery can 15, and the filter 22 is disposed inside the battery can 15. The lower valve 23 and the upper valve 25 are connected to each other at their center portions, and an insulating member 24 is interposed between their peripheral portions. The filter 22 and the lower valve 23 are connected to each other at their peripheral portions. The upper valve 25 and the cap 26 are connected to each other at their peripheral portions. A ventilation hole is formed at the lower valve 23. When the internal pressure of the battery case increases due to abnormal heat generation and the like, the upper valve 25 bulges to the cap 26 side to be apart from the lower valve 23. In this manner, the electrical connection between the lower valve 23 and the upper valve 25 is shut down. Furthermore, when the internal pressure increases, the upper valve 25 fractures and gas is released from the opening formed in the cap 26.

The electrode group 14 is formed with a positive electrode 110, a negative electrode (negative electrode current collector) 120, and a separator 300. The positive electrode 110, the negative electrode 120, and the separator 300 interposed therebetween are all elongated sheets (or strips), and are wound so that their width directions are in parallel with the winding axis.

The positive electrode 110 is electrically connected to the cap 26 also serving as a positive electrode terminal through a positive electrode lead 19. An end of the positive electrode lead 19 is connected, for example, near a center in the longitudinal direction of the positive electrode 110. The other end of the positive electrode lead 19 extended from the positive electrode 110 is welded to the inner side face of the filter 22 through the through holes formed in the insulating plates 17.

The negative electrode 120 is electrically connected to the battery can 15 also serving as a negative electrode terminal through the negative electrode lead 20. An end of the negative electrode lead 20 is connected to, for example, the end portion in the longitudinal direction of the negative electrode 120, and the other end is welded to the inner bottom face of the battery can 15.

FIG. 6 is an enlarged view schematically illustrating a region X surrounded by the broken line in FIG. 5 in a discharged state. In the example shown, the spacer 400 has a trapezoid cross section. However, the embodiment of the present disclosure is not limited thereto, and for example, it can be a rectangle, a rectangle with a curved line at at least one corner, an ellipse, and a portion of an ellipse. In the example shown, the spacer 400 is provided between the positive electrode 110 and the separator 300. However, the embodiment of the present disclosure is not limited thereto, and for example, the spacer 400 can be provided between the negative electrode 120 and the separator 300, or provided both between the positive electrode 110 and the separator 300, and between the negative electrode 120 and the separator 300.

The positive electrode 110 includes a positive electrode current collector 111 and a positive electrode mixture layer 112. A spacer 400 is provided between the positive electrode mixture layer 112 and the separator 300. The spacer 400 is composed of a lined projection 401 provided along the long side direction of the separator 300. In a discharged state, lithium metal is not deposited on the surface of the negative electrode current collector 121, and an inter-electrode plate space is kept between the positive electrode 110 and the separator 300. Meanwhile, in a charged state, lithium metal deposits on the surface of the negative electrode current collector 121, and is accommodated in the space between the positive electrode 110 and the separator 300 while receiving the pressure from the separator 300. Here, the negative electrode 120 includes the negative electrode current collector 121 in a discharged state, and in a charged state, includes the negative electrode current collector 121 and lithium metal deposited thereon. However, this configuration is just an example, and the negative electrode 120 may include, even in a discharged state, not only the negative electrode current collector 121, but lithium metal on its surface.

The lithium metal is accommodated in the space between the positive electrode 110 and the separator 300, and therefore in charge and discharge cycles, the apparent volume change of the electrode group involved with the lithium metal deposition is reduced. Thus, the stress applied to the negative electrode current collector 121 is suppressed as well. Furthermore, a pressure is applied to the lithium metal accommodated between the negative electrode 120 and the separator 300 from the separator 300, and therefore the deposition status of the lithium metal is controlled, and the lithium metal does not easily isolate, and decrease in charge and discharge efficiency is suppressed.

In the example shown, a cylindrical lithium secondary battery including a wound type electrode group is described, but the shape of the lithium secondary battery is not limited thereto, and it may be a prism, or can be selected suitably from various shapes in accordance with its application. A known configuration other than the above can be used without particular limitation.

### [Spacer]

The spacer 400 provided between the separator 300 and the positive electrode 110 and/or the negative electrode 120 forms an inter-electrode plate space S that accommodates deposited lithium metal. The separator 300 is generally an elongated sheet (strip) having a long side and a short side. The direction along the short side of the separator 300 is called D1. In a cross section parallel to the direction T of the spacer and parallel to the direction D 1 (hereinafter, referred to as base cross section), the contact length between any of the separator 300, the positive electrode 110 or the negative electrode 120, and the spacer 400 (width of a first region R1) is not particularly limited, and for example, it is 500 µm or more and 2000 µm or less. When the contact length is in this range, the stress applied to the spacer 400 is easily distributed equally to the separator 300, the positive electrode 110, and the negative electrode 120. The first region R1 opposing the spacer 400 is easily disposed to oppose the positive electrode 110 or the negative electrode 120 evenly and in a dispersed state. The contact length is an average value of the contact lengths at five different base cross sections.

The shape of the spacer 400 at the base cross section is not particularly limited. The shape of the spacer at the base cross section is, for example, rectangular, a rectangular with a curved line at at least one corner, a trapezoid, an ellipse, a portion of an ellipse, or those similar to these shapes.

The material forming the spacer 400 is not particularly limited. The spacer 400 may be formed, for example, by applying a solution or a dispersion liquid including a resin material and the like on a surface of the separator 300, the positive electrode 110, or the negative electrode 120 and the drying. The solvent or the dispersion medium is not particularly limited, and for example, N-methyl-2-pyrrolidone (NMP) can be used. The spacer 400 can also be formed by spraying particles on a surface of the separator 300, the positive electrode 110, or the negative electrode 120 in a desired shape. The spacer 400 may be formed by applying a curable resin on a surface of the separator 300, the positive electrode 110, or the negative electrode 120 in a desired shape, and then curing. The spacer 400 may be formed by attaching an adhesive tape on a surface of the separator 300, the positive electrode 110 or the negative electrode 120. Preferably, of the above-described methods, the method using a solution or a dispersion liquid including a resin material is preferable. In particular, the method using a dispersion liquid including a resin material and particles is preferable. In this case, the spacer is formed of a composite of a resin material and particles.

Examples of the resin material include fluorine-containing resins such as polyvinylidene fluoride (PVdF) and polytetrafluoroethylene; rubbers such as fluorine-containing rubbers including a vinylidene fluoride-tetrafluoroethylene copolymer and an ethylene-tetrafluoroethylene copolymer, a styrene-butadiene copolymer or a hydride thereof, an acrylonitrile-butadiene copolymer or a hydride thereof, a methacrylic acid ester-acrylic acid ester copolymer, a styrene-acrylic acid ester copolymer, an acrylonitrile-acrylic acid ester copolymer, an ethylene propylene rubber, polyvinyl alcohol, and polyvinyl acetate; cellulose derivatives such as ethylcellulose, methylcellulose, hydroxyethylcellulose, and carboxymethylcellulose; acrylic resins such as an acrylic acid-methacrylic acid copolymer; polyphenylene ether, polysulfone, polyether sulfone, polyphenylene sulfide, polyether imide, and polyimide; polyamides such as fully aromatic polyamide (aramid); polyimides; polyamide imides; polyacrylonitrile; polyvinyl alcohol; polyethers; polyacrylic acid; polymethacrylic acid; polyesters; polyolefins; silicone resins, urethane resins, melamine resins; urea resins; and epoxy resins.

The particles may be inorganic particles or organic particles. In particular, inorganic particles such as insulative metal oxides, metal hydroxides, metal nitrides, metal carbides, and metal sulfides may be used. For the metal oxides, aluminum oxide (alumina or boehmite), magnesium oxide, titanium oxide (titania), zirconium oxide, and silicon oxide (silica) are preferable materials. For the metal hydroxide, aluminum hydroxide and the like may be used. For the metal nitrides, silicon nitride, aluminum nitride, boron nitride, titanium nitride, and the like may be used. For the metal carbide, silicon carbide, boron carbide, and the like may be used. For the metal sulfide, barium sulfate and the like may be used. Furthermore, minerals such as aluminosilicate, layered silicate, barium titanate, and strontium titanate may be used. In particular, alumina, silica, and titania are preferably used.

The average particle size of the particles is not particularly limited, and for example, 10 µm or less is preferable, and 0.1 µm or more and 2.0 µm or less is more preferable. The average particle size can be determined by photographing cross sections of the spacer in the direction T in the secondary battery with an electron microscope, processing the image such as binarization of the photographed image to specify a particle portion C, and averaging the diameter of the corresponding circle having the same area as the particles. The average is preferably determined from, for example, 100 or more particles.

In a composite including the resin material and the particles, the particles are preferably included by, per 100 parts by mass of the resin material, 70 parts by mass or more and 100 parts by mass or less. In this manner, the spacer can easily have sufficient strength.

The spacer disposition is not particularly limited. Preferably, for example, the spacer is disposed so that a straight line SL passing through 3 or more (preferably 4 or more, more preferably 5 or more) points of the spacers can be drawn along the direction D 1, when seen from the direction T (normal direction to separator main surface). In this case, uneven or dendritic lithium metal deposition at the negative electrode does not easily occur. Furthermore, local expansion in the negative electrode is suppressed, and therefore damages to the electrode does not easily occur. In addition, supporting points by which the spacer supports the separator and the electrode increases, so that the separator and the electrode receive stress from the spacer relatively evenly. Thus, damages to the electrode are further suppressed. Furthermore, the separator can give more uniform pressure to the entire lithium metal to be deposited. Thus, the deposition direction of the lithium metal is easily controlled more to the surface direction of the negative electrode.

When seen from the direction T, in the straight line SL, the ratio of the minimum distance d (µm) between adjacent spacers to the spacer height h (µm):d/h may be, for example, 10 or more and 800 or less, or 40 or more and 400 or less. By controlling the d/h ratio to the above-described range, a sufficient space necessary for accommodating the lithium metal can be easily ensured. Furthermore, the separator can give more uniform pressure to the entire lithium metal to be deposited. The minimum distance d between adjacent spacers can be determined by measuring one minimum distance d for random 10 straight lines SL, and calculating the average value.

The spacer may be, for example, a plurality of lined projections disposed on a surface of the electrode or the separator in stripes so as to cross the direction D1. For example, on both ends of the separator surface in the direction D 1, a projection along the long side direction (hereinafter, direction D2) of the separator is provided, one at each end, and one or more projections along the direction D2 can be provided between the both ends. In this case, the straight lines SL can be drawn so as to pass the spacer with a total of 3 or more points, i.e., two at both ends, and 1 or more between the both ends. The spacer composed of such a plurality of lined projections can be formed relatively easily on a surface of the separator or the electrode. The parameters such as the height h, the ratio d/h, and the like can be easily controlled as well.

Next, description is given below of a spacer disposition with reference to the drawings. In the example shown, the spacer is provided at a surface of the separator. The embodiment of the present disclosure is not limited thereto, and the spacer may be provided on a surface of the electrode.

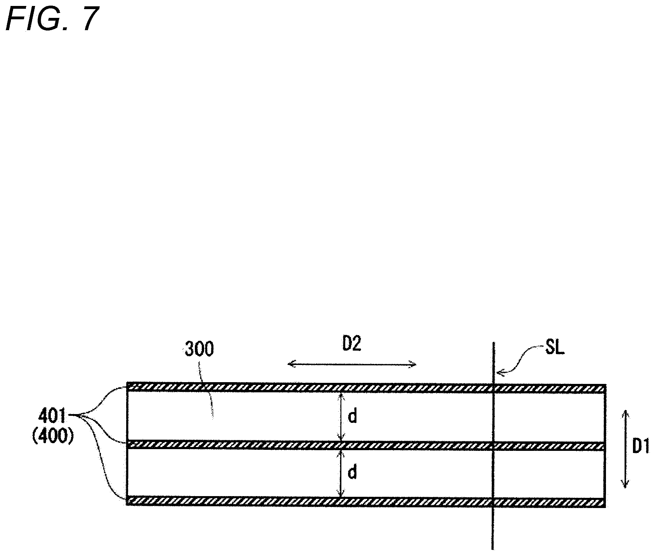

FIG. 7 is a plan view schematically illustrating a spacer disposed on a surface of the separator. The spacer 400 has lined projections 401 provided along the direction D2 at both ends in a direction D1 on a surface of the separator 300, and a lined projection 401 provided along the direction D2 at a center between the both ends. That is, the spacer 400 is composed of a total of three lined projections 401 substantially parallel to each other. Thus, the straight line SL drawn along the direction D1 passes the spacer 400 at three points. Substantially parallel means it is generally parallel, and the lined projections 401 may cross each other at an angle of, for example 0° to 20°, or 0° to 10°.

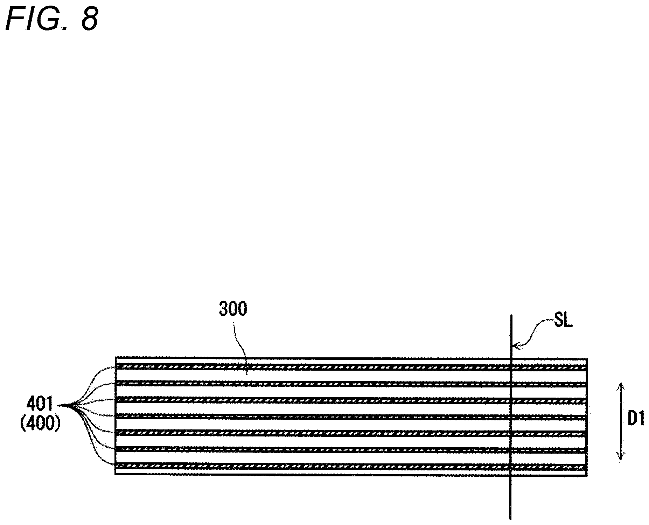

FIG. 8 is a plan view schematically illustrating another spacer disposed on a surface of the separator. The spacer 400 is composed of a plurality of lined projections 401 disposed in stripes on a surface of the separator 300 along the direction D2. In this case, the straight line SL can be drawn along the direction D1 so as to pass through the lined projections 401 by the number of the lined projections 401 (in the example shown, 7 points).

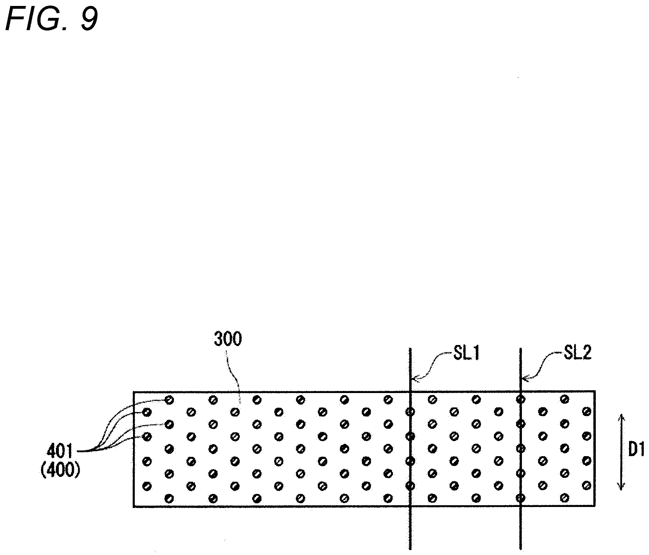

FIG. 9 is a plan view schematically illustrating still another spacer disposed on a surface of the separator. The spacer 400 is composed of a plurality of spotted projections 401 disposed to be distributed evenly on a surface of the separator 300. In the example shown, when drawing the straight line SL along the direction D1, depending on the position of the straight line SL, the number of the spotted projections 401 passed through changes. The straight line SL1 passes four projections 401, and the straight line SL2 passes five projections 401. In such a case, of the plurality of straight lines SL that can be drawn in different manners, it suffices at least one straight line SL passes through the projections of three or more.

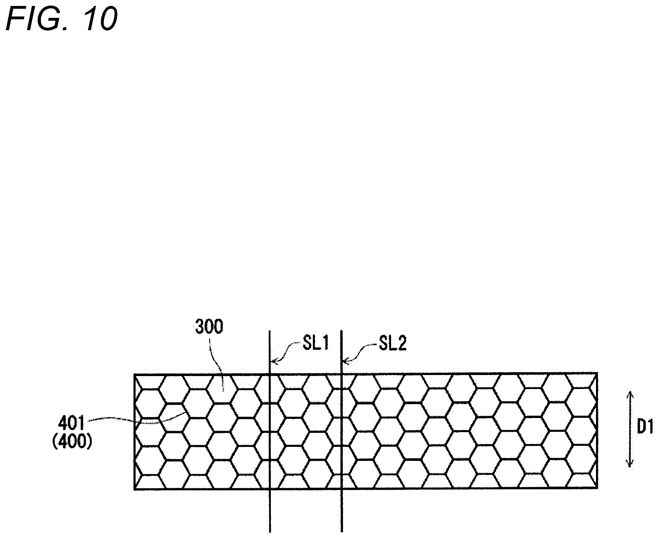

FIG. 10 is a plan view schematically illustrating still another spacer disposed on a surface of the separator. The spacer 400 is a honeycomb shaped continuous rib disposed to be distributed evenly on a surface of the separator 300. In this case as well, when a straight line SL is drawn along the direction D1, the number of the ribs to be passed differ depending on the position of the straight line SL. The straight line SL1 passes through the rib at five points, and the straight line SL2 passes through the rib at four points.

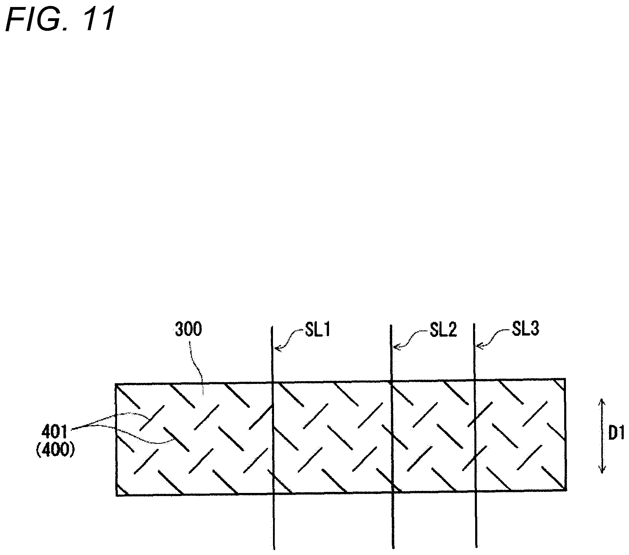

FIG. 11 is a plan view schematically illustrating still another spacer disposed on a surface of the separator. The spacer 400 is composed of a plurality of linear projections 401 disposed to be distributed evenly on a surface of the separator 300. The linear projection 401 is disposed alternately along the direction D1 so as to cross each other. In this case as well, when a straight line is drawn along the direction D1, the number of the linear projection 401 to be passed differs depending on the position of the straight line SL. For example, the straight line SL1 passes through three or four projections 401, and the straight line SL2 passes through three projections 401, and the straight line SL3 passes through two projections 401.

In the following, each of the elements of the lithium secondary battery is described further in detail.

### [Negative Electrode]

The negative electrode includes a negative electrode current collector. In lithium secondary batteries, lithium metal deposits on a surface of the negative electrode by charging. More specifically, lithium ions included in the nonaqueous electrolyte receive electrons on the negative electrode by charging to be a lithium metal, and deposit on the negative electrode surface. The lithium metal deposited on the negative electrode surface dissolves in the nonaqueous electrolyte by discharging as lithium ions. The lithium ion included in the nonaqueous electrolyte may be derived from a lithium salt added to the nonaqueous electrolyte, or may be supplied from the positive electrode active material by charging, or may be both.

The negative electrode may include a negative electrode current collector and a sheet of lithium metal or lithium alloy attached to the negative electrode current collector surfaces. That is, the negative electrode current collector may be provided with a base layer (lithium metal or lithium alloy layer (hereinafter, also referred to as "lithium base layer ")) including lithium metal in advance. The lithium alloy may include, other than lithium, elements such as aluminum, magnesium, indium, zinc, and the like. By providing the lithium metal base layer, and depositing the lithium metal thereon during charging, dendritic deposition can be further effectively suppressed. The thickness of the lithium metal base layer is not particularly limited, and may be, for example, in a range of 5 µm to 25 µm.

The negative electrode may include a lithium ion storage layer (i.e., a layer that develops a capacity by storing and releasing lithium ions into and from a negative electrode active material (e.g., graphite)) which is supported on the negative electrode current collector. In this case, the open circuit potential of the negative electrode at full charge may be 70 mV or less versus lithium metal (lithium dissolution-deposition potential). When the open circuit potential of the negative electrode at full charge is 70 mV or less versus lithium metal, the lithium ion storage layer at full charge has lithium metal on its surface. That is, the negative electrode develops a capacity through deposition and dissolution of lithium metal.

The lithium ion storage layer is a negative electrode mixture containing a negative electrode active material, formed in a layer form. The negative electrode mixture may contain, in addition to the negative electrode active material, a binder, a thickener, a conductive material, and other components.

Examples of the negative electrode active material include a carbonaceous material, a Si-containing material, and a Sn-containing material. The negative electrode may include one kind of negative electrode active material, or two or more kinds can be used in combination. Examples of the carbon material include graphite, graphitizable carbon (soft carbon), and non-graphitizable carbon (hard carbon).

The conductive material is, for example, a carbon material. For the carbon material, carbon black, acetylene black, Ketjen Black, carbon nanotube, graphite, and the like may be used.

Examples of the binder include a fluorine resin, polyacrylonitrile, a polyimide resin, an acrylic resin, a polyolefin resin, and a rubber polymer. For the fluorine resin, polytetrafluoroethylene, polyvinylidene fluoride, and the like are used.

The negative electrode current collector may be a conductive sheet. For the conductive sheet, a metal foil, a metal film, and the like are used. In particular, for the negative electrode current collector, a copper foil or a copper alloy foil is preferably used, without particular limitation. The material of the negative electrode current collector may be a metal material other than the lithium and the lithium alloy. The metal material may be, for example, Cu, Ni, Fe, or an alloy including these metal elements. For the alloy, a Cu alloy, a Fe alloy (stainless steel (SUS)), and the like are used.

The thickness of the negative electrode current collector may be, without particular limitation, for example, 5 µm or more and 300 µm or less.

### [Positive Electrode]

The positive electrode includes, for example, a positive electrode current collector, and a positive electrode mixture layer supported on the positive electrode current collector. The positive electrode mixture layer includes, for example, a positive electrode active material, a conductive material, and a binder. The positive electrode mixture layer may be formed on only one surface of the positive electrode current collector, or on both surfaces thereof. The positive electrode is produced by, for example, applying a positive electrode mixture slurry containing a positive electrode active material, a conductive material, and a binder onto both surfaces of the positive electrode current collector, drying the applied coating, and then rolling. For the positive electrode active material, the binder, and the conductive material, for example, known materials may be used.

The positive electrode active material is a material that stores and releases lithium ions. Examples of the positive electrode active material include lithium-containing transition metal oxide, transition metal fluoride, polyanion, fluorinated polyanion, and transition metal sulfide. In particular, the lithium-containing transition metal oxide is preferable in view of low production costs and high average discharge voltage.

The lithium-containing transition metal oxide is a composite oxide including lithium and a metal Me other than lithium, and the metal Me includes at least a transition metal. Preferably, of the lithium-containing transition metal oxides, in particular, a composite oxide having a rock salt type crystal structure having a layered structure (layered rock salt type) is used in terms of achieving a high capacity.

The metal Me may include, as a transition metal element, Sc, Ti, V, Cr, Mn, Fe, Co, Ni, Cu, Y, Zr, W, and the like. The lithium-containing transition metal oxide may include a kind of the transition metal element, or two or more kinds thereof. The metal Me preferably includes at least one selected from the group consisting of Co, Ni, and Mn as the transition metal element, and preferably include at least Ni as the transition metal.

The lithium-containing transition metal oxide may include, as necessary, one or more main group elements. For the main group element, Mg, Al, Ca, Zn, Ga, Ge, Sn, Sb, Pb, and Bi may be used. The main group element may be Al and the like. That is, the metal Me may include Al as an optional component.

The lithium-containing transition metal oxide is represented by, for example, a general formula (1): LiₐNi_{b}M_{1-b}O₂. In the general formula (1), 0.9 ≤ a ≤ 1.2 and 0.65 ≤ b ≤ 1 are satisfied, and M is at least one element selected from the group consisting of Co, Mn, Al, Ti, Fe, Nb, B, Mg, Ca, Sr, Zr, and W.

The molar ratio of a total amount of Li included in the positive electrode and the negative electrode mLi relative to the amount of metal Me included in the lithium-containing transition metal oxide mMe: mLi/mMe is, for example, 1.2 or less, or may be 1.1 or less.

Examples of the material of the positive electrode current collector include, for example, a metal material including Al, Ti, or Fe. The metal material may be Al, an Al alloy, Ti, a Ti alloy, or a Fe alloy (stainless steel (SUS)).

The thickness of the positive electrode current collector may be, without particular limitation, for example, 5 µm or more and 300 µm or less.

### [Separator]

For the separator, a porous sheet having ion permeability and insulating property is used. Examples of the porous sheet include a microporous thin film, woven fabric, and nonwoven fabric. The separator material is not particularly limited, and may be a polymer material. For the polymer material, an olefin resin, a polyamide resin, cellulose, and the like are used. For the olefin resin, polyethylene, polypropylene, and a copolymer of ethylene and propylene are used. The separator may include, as necessary, an additive. For the additive, an inorganic filler and the like are used.

The thickness of the separator is, without particular limitation, for example, 5 µm or more and 20 µm or less, or more preferably 10 µm or more and 20 µm or less.

### [Nonaqueous electrolyte]

A nonaqueous electrolyte with lithium ion conductivity includes, for example, a nonaqueous solvent, and lithium ions and anions dissolved in the nonaqueous solvent. The nonaqueous electrolyte may be a liquid or a gel. The liquid nonaqueous electrolyte is prepared by dissolving a lithium salt in a nonaqueous solvent. By dissolving the lithium salt in the nonaqueous solvent, lithium ions and anions are generated.

As the lithium salt or the anion, a known material used in a nonaqueous electrolyte of lithium secondary batteries can be used. Specifically, BF₄-, ClO₄-, PF₆-, CF₃SO₃-, CF₃CO₂-, anions of imides, and anions of oxalate complexes are used. For the anions of imides, N(SO₂CF₃)₂-, and N(CₘF₂ₘ₊₁SO₂)ₓ(CₙF₂ₙ₊₁SO₂)_{y}-(m and n are each independently an integer of 0 or 1 or more, x and y are each independently 0, 1, or 2, and x+ y = 2 is satisfied) are used. The oxalate complex anions may contain boron and/or phosphorus. The nonaqueous electrolyte may contain one kind of these anions, and may contain two or more kinds thereof.

In view of suppressing dendritic deposition of lithium metal, the nonaqueous electrolyte preferably includes at least an oxalate complex anion, and in particular, an oxalate complex anion having fluorine is preferable. Interaction between the oxalate complex anion having fluorine and lithium allows the lithium metal to deposit as fine particles homogeneously. Therefore, local deposition of lithium metal can be easily suppressed. The oxalate complex anion having fluorine and other anions may be combined. Other anions may be PF₆- and/or anions of imides. For the oxalate complex anion, bisoxalate borate anion, difluorooxalate borate anion (BF₂(C₂O₄)⁻), PF₄(C₂O₄)⁻, and PF₂(C₂O₄)₂- may be used, and preferably at least difluorooxalate borate anion is used.

Examples of the nonaqueous solvent include esters, ethers, nitriles, amides, and halogen substitutes thereof. The nonaqueous electrolyte may contain one kind of these nonaqueous solvents, and may contain two or more kinds thereof. Examples of the halogen substitutes include fluoride and the like.

Examples of the ester include carbonates and carboxylates. For the cyclic carbonate, ethylene carbonate, propylene carbonate, fluoroethylene carbonate (FEC), and the like may be used. Examples of the chain carbonate include dimethyl carbonate (DMC), ethyl methyl carbonate (EMC), and diethyl carbonate. Examples of the cyclic carboxylate include γ-butyrolactone and γ-valerolactone. Examples of the chain carboxylate include ethyl acetate, methyl propionate, and methyl fluoropropionate.

Ether includes cyclic ether and chain ether. Examples of the cyclic ether include 1,3-dioxolane, 4-methyl-1,3-dioxolane, tetrahydrofuran, and 2-methyltetrahydrofuran. Chain ethers include 1,2-dimethoxyethane, diethyl ether, ethyl vinyl ether, methyl phenyl ether, benzyl ethyl ether, diphenyl ether, dibenzyl ether, 1,2-diethoxyethane, diethyleneglycol dimethyl ether, and the like.

The concentration of the lithium salt in the nonaqueous electrolyte is, for example, 0.5 mol/L or more and 3.5 mol/L or less. The concentration of anion in the nonaqueous electrolyte may be 0.5 mol/L or more and 3.5 mol/L or less. The concentration of the oxalate complex anion in the nonaqueous electrolyte may be 0.05 mol/L or more and 1 mol/L or less.

### [Examples]

In the following, a lithium secondary battery of the present disclosure is described more in detail based on Examples and Comparative Examples. Note here that the present disclosure is not limited to the following Examples.

### <Example 1>

### (1) Positive electrode production

A rock salt type lithium-containing transition metal oxide containing Li, Ni, Co, and Al (molar ratio of Li relative to a total of Ni, Co, and Al is 1.0) and having a layered structure (NCA: positive electrode active material), acetylene black (AB; conductive material), and polyvinylidene fluoride (PVdF; binder) were mixed at a mass ratio of NCA: AB: PVdF = 95: 2.5: 2.5, and a suitable amount of N-methyl-2-pyrrolidone (NMP) was further added: the mixture was stirred, thereby preparing a positive electrode mixture slurry. The produced positive electrode mixture slurry was applied to both surfaces of a strip Al foil (positive electrode current collector), and then dried, and the coating of the positive electrode mixture was rolled using a roller. Lastly, the produced laminate of the positive electrode current collector and the positive electrode mixture was cut into a predetermined electrode size, thereby producing a positive electrode including the positive electrode mixture layers on both surfaces of the positive electrode current collector.

### (2) Spacer formation

A dispersion medium N-methyl-2-pyrrolidone (NMP) was mixed with 10 parts by mass of a resin material: polyvinylidene fluoride (PVdF) and 90 parts by mass of inorganic particles: alumina (including alumina with an average particle size of 1 µm and alumina with an average particle size of 0.1 µm at a mass ratio of 10/1), thereby preparing a spacer ink. A polyethylene-made separator (microporous film) with a thickness of 20 µm was prepared.

A spacer ink was applied to both surfaces of the separator at both ends in a direction D 1 and at a center along a direction D2 between the both ends, and thereafter, dried with hot air, thereby providing spacers of lined projections parallel to each other in a total of three. The spacer ink was applied using a dispenser. The spacer projections had a width of 1 mm, and a height of 30 µm.

In the direction D1, the minimum distance d between adjacent projections was 9 mm, and the ratio of the area of the first region relative to a total area of the first region and the second region was about 14%.

### (3) Negative electrode production

A strip electrolytic copper foil (thickness 15 µm) was prepared as a negative electrode current collector.

### (4) Nonaqueous electrolyte preparation

Ethylene carbonate (EC) and dimethyl carbonate (DMC) were mixed at a volume ratio of EC: DMC = 30: 70, and to the produced solvent mixture, LiPF₆ and LiBF₂(C₂O₄) were dissolved at concentrations of 1 mol /L and 0.1 mol /L, respectively, thereby preparing a liquid nonaqueous electrolyte.

### (5) Battery assembly

In an inert gas atmosphere, the positive electrode and the negative electrode current collector were wound into a spiral shape with the above-described separator interposed therebetween, thereby producing an electrode group. Lithium contained in the electrode group was all derived from the positive electrode, and therefore a molar ratio of a total amount of lithium contained in the positive electrode and the negative electrode mLi to the amount of the metal M contained in the positive electrode (here, Ni, Co, and Al) mM: mLi/mM was 1.0.

The electrode group had a hollow with a diameter of 3.2 mm, and an external diameter of 9.2 mm. The electrode group was inserted into a stainless steel (SUS with Young's modulus of 197GPa) made bottomed cylindrical battery can. The battery can had an internal diameter of 9.35 mm. Next, to the hollow of the electrode group, a stainless steel (SUS with Young's modulus 197GPa) made cylindrical core member was inserted. The material of the core member had a thickness of 200 µm, and an external diameter of 3.0 mm. At this time, a gap was present between the outer periphery of the electrode group and the inner periphery of the battery can, and a gap was present also between the inner periphery of the electrode group and the outer periphery of the core member. The size of the gap was designed so that with the subsequent charging and discharging, the outer periphery of the electrode group and the inner periphery of the battery can make contact, and the inner periphery of the electrode group and the outer periphery of the core member make contact. Afterwards, the nonaqueous electrolyte was injected, and the opening of the battery can was sealed with a sealing body, thereby completing a lithium secondary battery A1.

### <Comparative Example 1>

A lithium secondary battery B1 was made in the same manner as in Example 1, except that the electrode group was accommodated in a film case formed of a laminate sheet including an Al layer, and the core member was not inserted in the hollow of the electrode group.

### <Comparative Example 2>

A lithium secondary battery B2 was made in the same manner as in Example 1,except that the spacer was not formed on both surfaces of the separator. That is, the inter-electrode plate space was not provided to the electrode group of the battery B2.

### [Evaluation 1]

The produced batteries were evaluated by a charge and discharge test. In the charge and discharge test, a cycle of the following was repeated 200 times: in a 25°C thermostatic chamber, three batteries were charged with the conditions below, and then allowed to stand for 20 minutes, and discharged with the conditions below. The ratio of the discharge capacity at a predetermined cycle relative to the discharge capacity at the 1st cycle was determined as a capacity retention rate (%). Table 1 shows the results.

### (Charging)

Constant current charging was performed at a current of 10 mA per electrode unit area (square centimeter) until the battery voltage reached 4.1 V, and thereafter, constant voltage charging was performed at a voltage of 4.1 V until the electric current value reached 1 mA per electrode unit area.

### (Discharging)

Constant current discharging was performed at a current of 10 mA per electrode unit area until the battery voltage reached 3.0 V.

**[Table 1]**

| | 50 eye Capacity retention rate | 100 eye Capacity retention rate | 200 eye Capacity retention rate |
|---|---|---|---|
| Battery A1 | 99.9% | 98.5% | 92.8% |
| Battery B1 | 99.7% | 0% (foil fracture) | 0% |
| Battery B2 | 98.9% | 51.5% | 30.3% |

The battery A1 achieved an excellent capacity retention rate continuously. Meanwhile, the capacity retention rate of the battery B1 became 0% before reaching the 100th cycle. This means that the electrode fractured from buckling. In the battery B2, a sudden drop in the capacity retention rate occurred. This sudden drop means that the nonaqueous electrolyte was pressed out from the electrode group, and drying up occurred.

### [Industrial Applicability]

The lithium secondary battery of the present disclosure can be used for electronic devices such as mobile phones, smartphones, and tablet devices, electric automobiles, hybrid automobiles, plug-in hybrid automobiles, and household storage batteries.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

- 10: Lithium Secondary Battery
- 14: Electrode Group
- 15: Battery Can
- 16: Sealing Body
- 17, 18: Insulating Plates
- 19: Positive Electrode Lead
- 20: Negative Electrode Lead
- 21: Step Portion
- 22: Filter
- 23: Lower Valve
- 24: Insulating Member
- 25: Upper Valve
- 26: Cap
- 27: Gasket
- 30: Core Member
- 110: Positive Electrode
- 111: Positive Electrode Current Collector
- 112: Positive Electrode Mixture Layer
- 120: Negative Electrode
- 121: Negative Electrode Current Collector
- 300: Separator
- 400: Spacer
- 401: Projection

## Claims

1. A lithium secondary battery comprising:
a wound type electrode group including a positive electrode, a negative electrode, and a separator interposed between the positive electrode and the negative electrode,
a core member inserted in a hollow of the electrode group, and
a nonaqueous electrolyte having a lithium ion conductivity, wherein
in the negative electrode, a lithium metal deposits during charging and the lithium metal dissolves during discharging, and
the electrode group has a space that allows the separator to be apart from and oppose at least one of the positive electrode and the negative electrode.

2. The lithium secondary battery of claim 1, wherein a Young's modulus of a material of the core member is 100 MPa or more.

3. The lithium secondary battery of claim 2, wherein the material of the core member is stainless steel.

4. The lithium secondary battery of any one of claims 1 to 3, wherein a shape of the core member is cylindrical.

5. The lithium secondary battery of any one of claims 1 to 4, further comprising an outer can accommodating the electrode group, the core member, and the nonaqueous electrolyte, and
an inner periphery of the outer can opposes an outer periphery of the electrode group.

6. The lithium secondary battery of claim 5, wherein a material of the outer can has a Young's modulus of 100 MPa or more.

7. The lithium secondary battery of claim 5 or 6, wherein the material of the outer can is stainless steel.

8. The lithium secondary battery of any one of claims 1 to 7, wherein a separation distance between the separator and at least one of the positive electrode and the negative electrode is 15 µm or more and 60 µm or less.

9. The lithium secondary battery of any one of claims 1 to 8, further including a spacer interposed between the separator and at least one of the positive electrode and the negative electrode, and the space is provided by the spacer.

10. The lithium secondary battery of claim 9, wherein the spacer is provided on at least one selected from the group consisting of a surface of the positive electrode, a surface of the negative electrode, and a surface of the separator.

11. The lithium secondary battery of any one of claims 1 to 10, wherein the negative electrode includes the negative electrode current collector and a sheet type lithium metal that is in close contact with a surface of the negative electrode current collector.

12. The lithium secondary battery of claim 11, wherein the negative electrode current collector is a copper foil or a copper alloy foil.

13. The lithium secondary battery of any one of claims 1 to 12, wherein the positive electrode includes a composite oxide including lithium and a metal Me other than lithium, and
the metal Me includes at least a transition metal.

14. The lithium secondary battery of claim 13, wherein a molar ratio of a total amount of Li included in the positive electrode and the negative electrode mLi relative to an amount of the metal Me included in the composite oxide mMe: mLi/mMe is 1.2 or less.

15. The lithium secondary battery of claim 13 or 14, wherein the composite oxide has a layered rock salt type crystal structure, and
the metal Me includes at least Ni as the transition metal.

16. The lithium secondary battery of claim 15, wherein the composite oxide is represented by a general formula (1): LiₐNi_{b}M_{1-b}O₂,
in the general formula (1), 0.9 ≤ a ≤ 1.2 and 0.65 ≤ b ≤ 1 are satisfied, and
M is at least one element selected from the group consisting of Co, Mn, Al, Ti, Fe, Nb, B, Mg, Ca, Sr, Zr, and W.

17. The lithium secondary battery of any one of claims 1 to 16, wherein the nonaqueous electrolyte includes lithium ion and an anion, and
the anion includes an oxalate complex anion.

18. The lithium secondary battery of claim 17, wherein the oxalate complex anion includes a difluorooxalate borate anion.
